(19) Europäisches Patentamt

European Patent Office

Office européen des brevets

(11) EP 0 611 691 B1

(12) **EUROPEAN PATENT SPECIFICATION**

(45) Date of publication and mention
of the grant of the patent:
**18.12.1996 Bulletin 1996/51**

(51) Int. Cl.⁶: **B62D 5/04**, H02P 7/00

(21) Application number: **94102152.9**

(22) Date of filing: **11.02.1994**

(54) **Motorized power steering apparatus**

Servolenkung mit Motorantrieb

Direction assistée par un moteur

(84) Designated Contracting States:
**DE FR GB IT**

(30) Priority: **18.02.1993 JP 29431/93**

(43) Date of publication of application:
**24.08.1994 Bulletin 1994/34**

(73) Proprietor: **KOYO SEIKO CO., LTD.**
**Osaka 542 (JP)**

(72) Inventors:
• **Matsuoka, Hirofumi,**
**c/o Koyo Seiko Co., Ltd.**
**Chuo-ku, Osaka 542 (JP)**
• **Nishimoto, Mitsuhiko,**
**c/o Koyo Seiko Co., Ltd.**
**Chuo-ku, Osaka 542 (JP)**

(74) Representative: **Popp, Eugen, Dr. et al**
**MEISSNER, BOLTE & PARTNER**
**Postfach 86 06 24**
**81633 München (DE)**

(56) References cited:
**EP-A- 0 276 005**          **EP-A- 0 315 597**
**EP-A- 0 361 726**          **WO-A-90/13465**
**GB-A- 2 167 025**          **GB-A- 2 206 321**

## Description

The present invention relates to a motorized power steering apparatus for transmitting, to the steering mechanism, torque generated by the motor driven in response to steerage, thereby to assist the steerage.

The U.K. patent application GB-A-2 167 025 discloses an electric power steering system for motor vehicles. A direct current motor is arranged to supply auxiliary torque to an input shaft connected to the steering wheel of a vehicle. Torque detection means are provided for detecting the steering torque present on the input shaft. A control circuit applies a driving control signal to the DC motor in accordance with an output signal from the detection means. The control signal comprises an armature voltage of the motor having a value dependent on the magnitude of the steering torque acting on the input shaft.

Conventionally, a motorized power steering apparatus is adapted such that, when steerage is conducted by rotating a steering wheel, the motor gives, to the steering mechanism, an assisting force corresponding to steering torque applied to the steering shaft, thereby to assist the steerage.

More specifically, the motor is attached to a steering column which holds the steering shaft. The rotation force of the motor is transmitted to the steering shaft through a worm gear. A torsion bar is disposed at an intermediate portion of the steering shaft. When the steering wheel is operated, the torsion bar is slightly twisted. This relatively displaces the input shaft and the output shaft which are connected to each other by the torsion bar. Such a relative displacement is detected by a torque sensor, and an electric current to be supplied to the motor is controlled based on the result of such detection. Accordingly, the steerage can be assisted according to steering torque applied to the steering shaft.

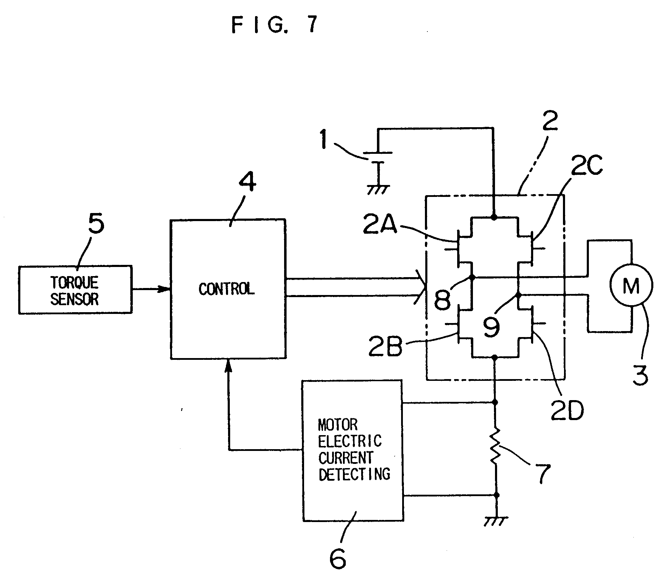

Fig. 7 is a block diagram illustrating the electric arrangement of the motorized power steering apparatus above-mentioned. An electric power from a battery 1 mounted on a vehicle, is given to a motor drive circuit 2, to which a motor 3 is connected. Torque generated by the motor 3 is transmitted to the steering shaft, thus assisting the steerage.

In the motor drive circuit 2, a series circuit of power transistors 2A, 2B and a series circuit of power transistors 2C, 2D are connected in parallel to the battery 1. The motor 3 is connected between a connection point 8 of the power transistors 2A, 2B and a connection point 9 of the power transistors 2C, 2D. A pulse width control signal is given to each of the power transistors 2A, 2B, 2C, 2D from a control circuit 4 including a microcomputer.

An output of a torque sensor 5 is supplied to the control circuit 4. Also given to the control circuit 4 is an output of a motor electric current detecting circuit 6 for detecting an electric current flowing in the motor 3. The motor electric current detecting circuit 6 is adapted to detect a voltage across both ends of an electric current detecting resistance 7 connected in series to the motor drive circuit 2, thereby to detect the magnitude of the electric current flowing in the motor 3.

Based on output signals of the torque sensor 5 and the motor electric current detecting circuit 6, the control circuit 4 generates a control signal to be supplied to the motor drive circuit 2. More specifically, based on an output signal of the torque sensor 5, the control circuit 4 obtains a target electric current value to be supplied to the motor 3. The output signal of the torque sensor 5 represents the direction and magnitude of a steering force. Corresponding to this output, the target electric current value becomes a value corresponding to the direction and magnitude of torque to be generated by the motor 3. For example, when torque in the clockwise rotational direction (hereinafter referred to as clockwise rotational torque) is to be given to the steering shaft, the target electric current value becomes a positive value. On the other hand, when torque in the counterclockwise rotational direction (hereinafter referred to as counterclockwise rotational torque) is to be given to the steering shaft, the target electric current value becomes a negative value.

The target electric current value is compared with an output of the motor electric current detecting circuit 6 to obtain a difference therebetween, and based on such a difference, a voltage to be applied to the motor 3 is determined. Given to the motor drive circuit 2 is a pulse width control signal at a duty ratio corresponding to the voltage thus determined. By applying the pulse width control signal to the transistors of the motor drive circuit 2, the motor 3 generates torque of which direction and magnitude are corresponding to those of steering torque detected by the torque sensor 5. When clockwise rotational torque is applied to the steering wheel, one pair of power transistors 2A, 2D are turned on/off and the other pair of power transistors 2B, 2C are maintained non-conductive. When counterclockwise rotational torque is applied to the steering wheel, the other pair of power transistors 2B, 2C are turned on/off and the one pair of power transistors 2A, 2D are maintained nonconductive. This causes the motor 3 to generate torque in the same direction as that of the torque applied to the steering wheel. In such a manner, the motor 3 generates torque of which magnitude and direction are corresponding to those of the steering torque, thus assisting the steerage.

Meanwhile, the motor electric current detecting circuit 6 can detect only the magnitude of the electric current flowing in the motor 3, but cannot detect the direction thereof. More specifically, the direction of an electric current flowing in the electric current detecting resistance 7 is constant both when the one pair of power transistors 2A, 2D are conducted to cause the motor 3 to generate clockwise rotational torque and when the other pair of power transistors 2B, 2C are conducted to cause the motor 3 to generate counterclockwise rotational torque. It is therefore not possible to know, based on an output of the motor electric current detecting circuit 6, the direction of torque generated by the motor 3.

In this connection, the control circuit 4 executes a control processing on the assumption that there flows, in the motor 3, an electric current of which direction is corresponding to the direction of torque detected by the torque sensor 5 so that the sign of an electric current value detected by the motor electric current detecting circuit 6 is considered identical with that of the target electric current value.

In such a processing, however, the direction of the motor electric current is erroneously recognized when the steering torque applied to the steering wheel is changed in direction. In this connection, it is not always possible to give a proper control signal to the motor drive circuit 2. Accordingly, when the steering torque is frequently switched in direction particularly at the time when the vehicle makes a straight drive, there are caused troubles such as vibration, loud motor noise and the like.

For example, it is now supposed that, when the steering torque is switched from the counterclockwise rotational direction to the clockwise rotational direction, the one pair of power transistors 2A, 2D are to be turned on/off at a certain duty ratio to cause the motor 3 to generate clockwise rotational torque. In such a case, the electric current flowing in the motor 3 immediately before switching the steering torque in direction, has a negative value corresponding to the counterclockwise rotational torque. Accordingly, when the electric current value detected by the motor electric current detecting circuit 6 is processed as a positive value corresponding to the clockwise rotational torque, this means that a duty ratio smaller than a proper value is set. Accordingly, the motor cannot generate sufficient torque. This results in a certain delay time before a necessary assisting force is given to the steering shaft, thus producing vibration, loud motor noise and the like.

It is an object of the present invention to provide a motorized power steering apparatus capable of securely giving, to the steering mechanism, a steerage assisting force corresponding to steering torque applied to the steering wheel.

It is another object of the present invention to provide a method of controlling a motorized power steering apparatus capable of securely giving, to the steering mechanism, a steerage assisting force corresponding to steering torque applied to the steering wheel.

According to the present invention, a power steering apparatus and a control method are provided as defined in claims 1 and 5, respectively. The preamble of the claims is based on the prior art of Fig 7. The motor is feedback-controlled with consideration given not only to the magnitude of the electric current flowing in the motor but also to the direction thereof. Accordingly, even though the direction of the steering torque is switched, a proper voltage can be immediately applied to the motor. It is therefore possible to securely give, to the steering mechanism, a steerage assisting force corresponding to the steering torque without vibration and loud motor noise produced.

These and other objects and advantages of the present invention will be more fully apparent from the following detailed description of embodiments when taken in conjunction with the accompanying drawings.

Figure 1 is a schematic view of the arrangement of a motorized power steering apparatus according to an embodiment of the present invention;
Figure 2 is a block diagram illustrating the electric arrangement of the motorized power steering apparatus shown in Figure 1;
Figure 3 is a characteristic view illustrating changes in assisting electric current value with respect to steering torque and vehicle speed;
Figure 4 is a characteristic view illustrating changes in differential control electric current value with respect to the differential value of steering torque and vehicle speed;
Figure 5 is an electric circuit diagram illustrating a specific arrangement relating to the motor drive circuit;
Figure 6 is a flow chart illustrating processings for drivingly controlling the motor; and
Figure 7 is a block diagram illustrating the electric arrangement of a conventional motorized power steering apparatus.

## DESCRIPTION OF PREFERRED EMBODIMENTS

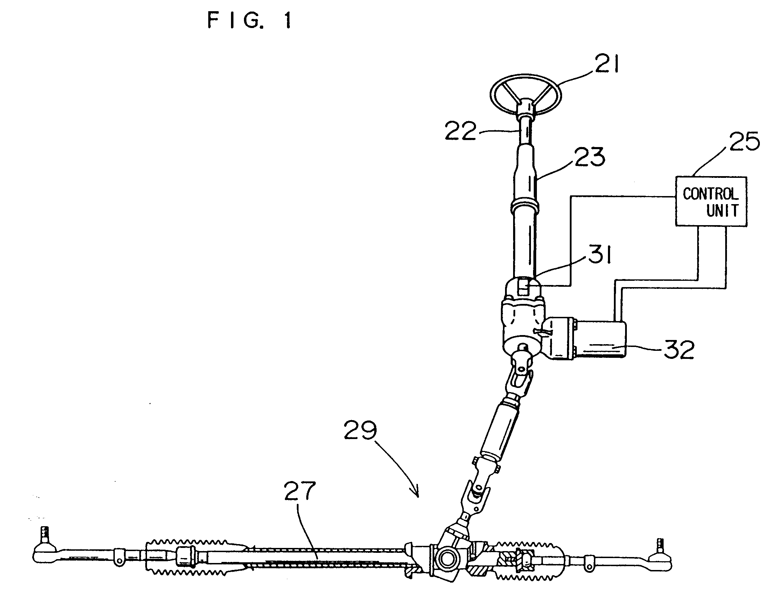

Fig. 1 is a schematic view illustrating the arrangement of a motorized power steering apparatus according to an embodiment of the present invention. A motor 32 is attached to a steering column 23 which holds a steering shaft 22. Torque generated by the motor 32 is transmitted to the steering shaft 22 through a worm gear (not shown). A torsion bar (not shown) is disposed at an intermediate portion of the steering shaft 22. When a steering wheel 21 is operated, the torsion bar is slightly twisted. This relatively displaces the input shaft and the output shaft which are connected to each other by the torsion bar. Such a relative displacement is detected by a torque sensor 31. Based on the result of such detection, an electric current supplied to the motor 32 is controlled by a control unit 25.

Torque applied to the steering shaft 22 is transmitted to a mechanism 29 including a rack shaft 27 and the like. Wheels are respectively connected to both ends of the rack shaft 27. When the steering shaft 22 is rotated, the rack shaft 27 is axially displaced, thus achieving steerage.

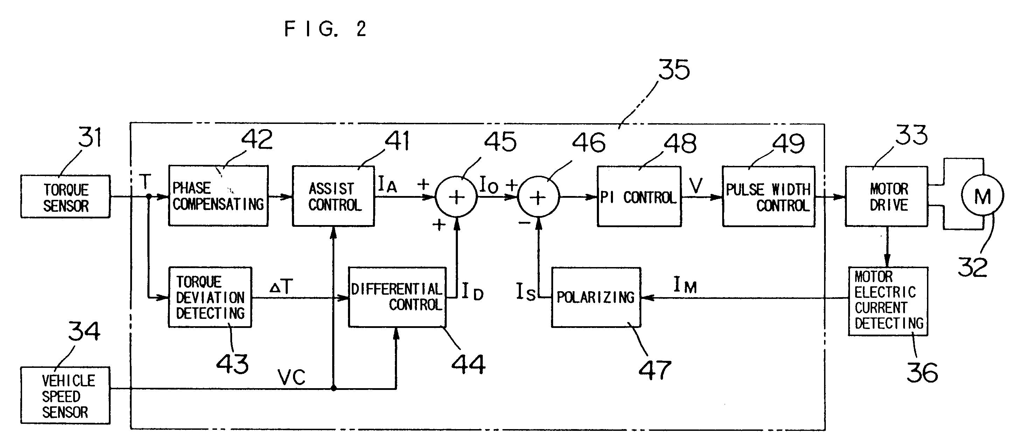

Fig. 2 is a block diagram of the electric arrangement of the motorized power steering apparatus above-mentioned. An electric current is supplied to the motor 32 from a motor drive circuit 33, which is controlled by a control circuit 35 including a microcomputer. Given to the control circuit 35 are a torque signal from the torque sensor 31 and a vehicle speed signal supplied from a vehicle speed sensor 34 for detecting the vehicle speed. Also given to the control circuit 35 is a signal from a motor electric current detecting circuit 36 connected to the motor drive circuit 33. The motor electric current detecting circuit 36 detects the magnitude of an electric current flowing in the motor 32 and feedbacks the magnitude thus detected, to the control circuit 35. Based on the torque signal and the vehicle speed signal, the control circuit 35 operates a target electric current value to be given to the motor 32. Based on the target electric current value and the motor electric current value detected by the motor electric current detecting circuit 36, the control circuit 35 obtains a voltage value to be applied to the motor 32. Based on the voltage value thus obtained, the control circuit 35 controls the motor drive circuit 33. Accordingly, the electric current flowing in the motor 32 approaches the target electric current value corresponding to the steering torque applied to the steering wheel 21.

The control circuit 35 has an assist control unit 41 for operating an assist electric current value $I_A$ corresponding to torque to be generated by the motor 32. The assist electric current value $I_A$ is operated based on (i) the direction and magnitude of steering torque T detected by the torque sensor 31 and (ii) a vehicle speed VC detected by the vehicle speed sensor 34. A torque signal supplied by the torque sensor 31 is compensated in phase by a phase compensating unit 42, and then supplied to the assist control unit 41. Such phase compensation is conducted to restrain self-excited vibration of the system to stably control the motor 32.

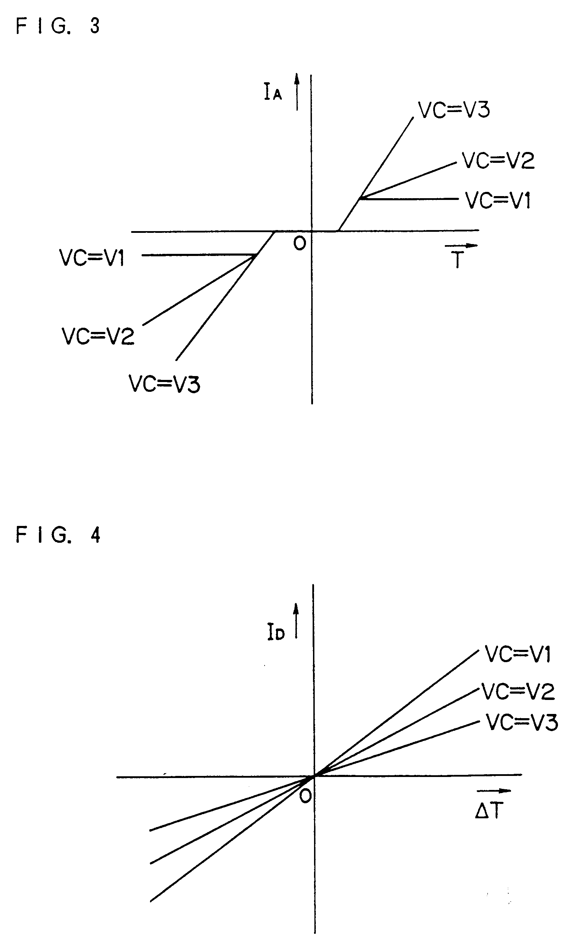

The assist electric current value $I_A$ is operated, for example, according to a characteristic view in Fig. 3. More specifically, as the steering torque T becomes greater, the assist electric current value $I_A$ becomes greater, and as the vehicle speed VC becomes greater, the assist electric current value $I_A$ becomes smaller. This is because, during a high-speed travelling, a great steerage assisting force is not required but it is enough to give a small steerage assisting force to the steering shaft 22. In Fig. 3, V1 is larger than V2, which is larger than V3. In the steerage torque T, clockwise rotational torque to be applied in such a direction as to rotate the steering wheel 21 clockwise, is positive and counterclockwise rotational torque to be applied in the direction opposite to the direction above-mentioned, is negative. That is, the assist electric current value $I_A$ exhibits a positive value for the clockwise rotational torque, and a negative value for the counterclockwise rotational torque.

On the other hand, the output signal of the torque sensor 31 is also supplied to a torque deviation detecting unit 43 for detecting a differential value $\Delta T$ of a torque signal (the amount of change in steering torque T in a predetermined period of time). A detected differential value $\Delta T$ is supplied to a differential control unit 44, to which also supplied is the vehicle speed signal from the vehicle speed sensor 34. The differential control unit 44 is disposed for making dynamic compensation to prevent the steerage feeling from being deteriorated due to the inertia of the motor 32. Based on the differential value $\Delta T$ and the vehicle speed VC, the differential control unit 44 generates a differential control electric current value $I_D$ for correcting the assist electric current value $I_A$.

The differential control electric current value $I_D$ is operated according to the characteristic view in Fig. 4. More specifically, the differential control electric current value $I_D$ is monotonously increased in proportion to the differential value $\Delta T$ of the steering torque T and also increased with an increase in vehicle speed VC.

The assist electric current value $I_A$ supplied from the assist control unit 41 and the differential control electric current value $I_D$ are added to each other by an adder 45. The resulting sum serves as a target electric current value $I_O$. The target electric current value $I_O$ becomes positive for clockwise rotational torque which is torque in the clockwise rotational direction to be applied to the steering shaft 22, and becomes negative for counterclockwise rotational torque which is torque in the counterclockwise rotational direction to be applied to the steering shaft 22.

The target electric current value $I_O$ is supplied to a subtracter 46, to which also supplied is a polarized motor electric current detection value $I_S$ from a polarizing unit 47 for polarizing a motor electric current detection value $I_M$ detected by the motor electric current detecting circuit 36. The subtracter 46 operates a difference between the target electric current value $I_O$ and the polarized motor electric current detection value $I_S$, and supplies the difference thus operated, to a PI (Proportional-Integral) control unit 48. The polarizing unit 47 gives a positive polarity to a motor electric current detection value $I_M$ corresponding to the clockwise rotational torque, and a negative polarity to a motor electric current detection value $I_M$ corresponding to the counterclockwise rotational torque.

Based on an output of the subtracter 46, the PI control unit 48 operates a target voltage value V to be applied to the motor 32. The target voltage value V is a positive value in the case where clockwise rotational torque is to be generated by the motor 32, and a negative value in the case where counterclockwise rotational torque is to be generated by the motor 32. The target voltage value V operated by the PI control unit 48, is entered into a pulse width control unit 49. The pulse width control unit 49 generates a pulse width control signal corresponding to the target voltage value V, and applies the signal thus generated to the motor drive circuit 33.

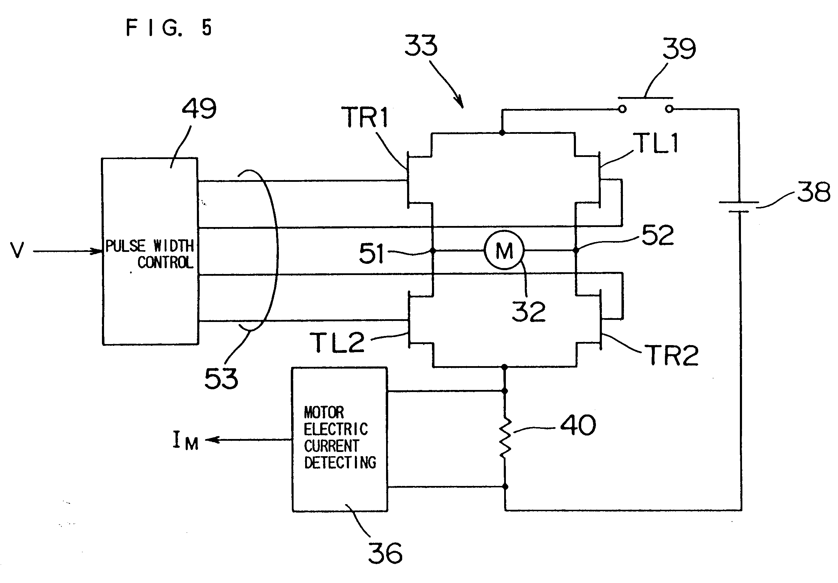

Fig. 5 shows an electric circuit diagram illustrating a specific arrangement relating to the motor drive circuit 33. An electric power from a battery 38 mounted on the vehicle, is supplied to the motor drive circuit 33 through a fail-safe relay 39. The fail-safe relay 39 is opened/closed by the control circuit 35. An electric current detecting resistance 40 is connected in series to the motor drive circuit 33. The motor electric current detecting circuit 36 detects a voltage across both ends of the electric current detecting resistance 40, thus detecting an electric current value $I_M$ flowing in the motor 32.

In the motor drive circuit 33, a series circuit of power transistors TR1, TL2 and a series circuit of power transistors TL1, TR2 are connected to each other in parallel. The motor 32 is connected between (i) a connection point 51 between the power transistors TR1, TL2 and (ii) a connection point 52 between the power transistors TL1, TR2. A pulse width control signal from the pulse width control unit 49 is supplied to each of the power transistors TR1, TR2, TL1, TL2 through lines 53. When the target voltage value V supplied from the PI control unit 48 is a positive value and clockwise rotational torque is to be generated by the motor 32, one pair of transistors TR1, TR2 are selected and turned on/off at a duty ratio corresponding to the target voltage value V, and the other pair of transistors TL1, TL2 are maintained nonconductive. On the other hand, when the target voltage value V is a negative value such that the motor 32 generates counterclockwise rotational torque, the other pair of transistors TL1, TL2 are selected and turned on/off at a duty ratio corresponding to the target voltage value V, and the one pair of transistors TR1, TR2 are maintained nonconductive. Accordingly, the direction of an electric current to be supplied to the motor 32 for generating clockwise rotational torque, is opposite to that of an electric current to be supplied to the motor 32 for generating counterclockwise rotational torque. In either case, the direction of an electric current flowing in the electric current detecting resistance 40 is constant. Accordingly, the motor electric current detection value $I_M$ supplied from the motor electric current detecting circuit 36, represents only the magnitude of an electric current flowing in the motor 32.

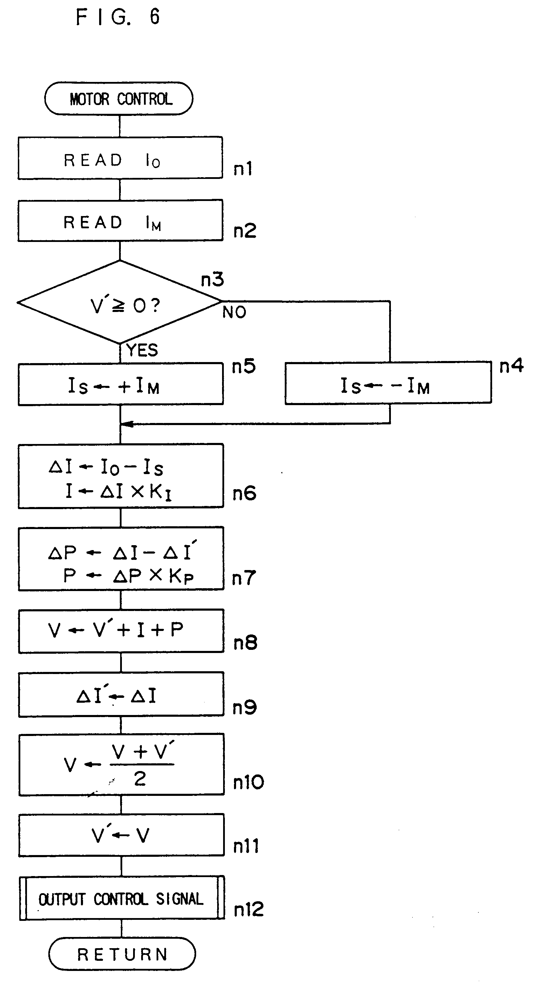

Fig. 6 is a flow chart for illustrating the operation of the control circuit 35 relating to the control of the motor 32. Mainly shown in Fig. 6 are operations to be repeatedly executed in the subtracter 46, the polarizing unit 47, the PI control unit 48, the pulse width control unit 49 and the like.

A target electric current value $I_O$ is read at a step n1, and a motor electric current detection value $I_M$ is read at a step n2. At a step n3, it is checked whether or not the previous target voltage value V' is a positive value corresponding to clockwise rotational torque. If the voltage value V' is negative, there is substituted at a step n4, for a polarized motor electric current detection value $I_S$, a motor electric current detection value $I_M$ with a negative sign. If the voltage value V' is positive, there is substituted at a step n5, for the polarized motor electric current detection value $I_S$, the motor electric current detection value $I_M$ as it is. The processings at the steps n3 to n5, are executed at the polarizing unit 47.

Processings at steps n6 to n11 are to be executed at the subtracter 46 and the PI control unit 48. The PI control unit 48 mainly executes a so-called PI operation and a filtering processing for stabilizing the control. By the PI operation, there are weighed-added, to the previous target voltage value V', (i) a P element proportional to a change in the output of the subtracter 46 and (ii) an I element equivalent to the integral value of the change above-mentioned, thus obtaining the current target voltage value V.

More specifically, at the step n6, the I element is obtained based on an output $\Delta I$ ($= I_O - I_S$) of the subtracter 46 according to the following equation (1):

$$I = \Delta I \times K_I \qquad (1)$$

wherein $K_I$ is a constant corresponding to the I element.

At the step n7, a difference $\Delta P$ ($= \Delta I - \Delta I'$) between the current $\Delta I$ and the previous $\Delta I$ ($= \Delta I'$), is obtained, and the P element is obtained according to the following equation (2):

$$P = \Delta P \times K_p \qquad (2)$$

wherein $K_p$ is a constant corresponding to the P element.

At the step n8, the I element and the P element respectively obtained at the steps n6, n7 are added to the previous target voltage value V', thus obtaining the current target voltage value V.

After $\Delta I$ has been substituted for $\Delta I'$ at the step n9, the filtering processing is executed at the step n10. More specifically, the average of the previous target voltage value V' and the target voltage value V obtained at the step n8, is newly set as the current target voltage value V. At the step n11, V is substituted for V'.

When the current target voltage value V is determined in such a manner, the pulse width control unit 49 controls the motor drive circuit 33 based on the target voltage value V. More specifically, when the target voltage value V is positive, the one pair of transistors TR1, TR2 are selected and conducted. For example, provision is made such that the transistor TR1 is conducted at all times and that the transistor TR2 is controlled as turned on/off at a duty ratio corresponding to the target voltage value V. Accordingly, a voltage equivalent to the target voltage value V can be applied to the motor 32. When the target voltage value V is negative, the other pair of transistors TL1, TL2 are selected, and similar operations are carried out (step n12).

According to the embodiment discussed in the foregoing, a polarity identical with that of the previous target voltage value V', is given to the motor electric current detection value $I_M$ detected by the motor electric current detecting circuit 36. Based on a difference between the polarized motor electric current detection value $I_S$ and the target electric current value $I_O$, the current target voltage value V is determined. Accordingly, the motor 32 can be accurately feedback-controlled with consideration given also to the direction of an electric current flowing in the motor 32.

Accordingly, for example, even though the direction of steering torque applied to the steering wheel 21 is switched, there is immediately set a target voltage value V accurately corresponding to a difference between the electric current actually flowing in the motor 32 and the target electric current value. Accordingly, the motor 32 quickly generates a sufficient steerage assisting force. This prevents the generation of vibration, loud motor noise and the like.

An embodiment of the present invention has been discussed in the foregoing, but the present invention is not limited to the embodiment above-mentioned. For example, the component elements in the control circuit 35 may be arranged by hardware, or similar functions may be conducted by software to be executed by a microcomputer.

## Claims

1. A motorized power steering apparatus comprising:

    a torque sensor (31) for detecting steering torque;

    a motor (32) for generating a drive force to be supplied to a steering mechanism for assisting steerage;

    means (41, 42, 43, 44, 45) for determining a target electric current value (Io) based on the steering torque detected by said torque sensor (31);

    motor electric current detecting means (36) for detecting a value of an electric current (Im) flowing in said motor (32); and

    control means (46, 48, 49) for feedback-controlling a target voltage (V) to be applied to said motor (32),

    characterized in that
    polarizing means (47) are provided comprising means for determining the polarity of the voltage (V') previously applied to the motor (32) and means for polarizing the motor electric current detection value (Im) with the determined polarity of the previously applied voltage (V'), and
    said control means (46, 48, 49) comprises means (46, 48) to determine the target voltage to be applied to the motor (32) on the basis of the target electric current value (Io) and the polarized motor electric current detection value (Is).

2. A motorized power steering apparatus according to Claim 1, wherein
    the target electric current value (Io) has a polarity corresponding to a direction of torque to be applied to the steering mechanism from the motor (32), and

the value of the target voltage applied to said motor (32) has a polarity corresponding to a direction of torque to be applied to the steering mechanism from said motor (32).

3. A motorized power steering apparatus according to Claim 1, wherein the control means (46, 48, 49) controls the target voltage to be applied to the motor (32), based on a difference between the polarized motor electric current detection value (Is) and the target electric current value (Io).

4. A motorized power steering apparatus according to Claim 1, wherein the control means (46, 48, 49) comprises:

    means (48, 49) for supplying, based on a polarity of the target voltage value, a pulse width control signal to either one of a first drive means (TR1, TR2) and a second drive means (TL1, TL2);

    means (48, 49) for determining a duty ratio of the pulse width control signal based on the target voltage value,

    wherein the first drive means (TR1, TR2) supplies the motor (32) with an electric current in one direction at the duty ratio of the pulse width control signal; and

    wherein the second drive means (TL1, TL2) supplies said motor (32) with an electric current in the other direction at the duty ratio of the pulse width control signal.

5. A control method for a motorized power steering apparatus providing a drive force generated by a motor (32) to a steering mechanism in order to assist steerage, comprising:

    detecting steering torque;

    determining a target electric current value (Io) based on the detected steering torque;

    detecting an electric current value (Im) flowing in said motor (32);

    characterized by
    determining the polarity of the previously applied voltage (V') to the motor (32) and polarizing the motor electric current detection value (Im) with the determined polarity of the previously applied voltage (V');
    feedback-controlling a target voltage (V) to be applied to the motor (32) by determining the target voltage (V) on the basis of the target electric current value (Io) and the polarized motor electric current detection value (Is).

6. A control method of a motorized power steering apparatus according to Claim 5, wherein the target electric current value (Io) has a polarity corresponding to a direction of torque to be applied to the steering mechanism from the motor (32), and the value of the target voltage (V) to be applied to said motor (32) has a polarity corresponding to a direction of torque to be applied to said steering mechanism from said motor (32).

7. A control method of a motorized power steering apparatus according to Claim 5, further comprising:

controlling the target voltage (V) to be applied to the motor (32) based on a difference between the polarized motor electric current detection value (Is) and the target electric current value (Io).

8. A control method of a motorized power steering apparatus according to Claim 5, further comprising:

supplying, based on a polarity of said target voltage value (V), a pulse width control signal to either one of a first drive means (TR1, TR2) and a second drive means (TL1, TL2); and

determining a duty ratio of the pulse width control signal based on the target voltage value,

wherein the first drive means (TR1, TR2) supplies the motor (32) with an electric current in one direction at the duty ratio of the pulse width control signal; and

second drive means (TL1, TL2) supplies said motor (32) with an electric current in the other direction at the duty ratio of the pulse width control signal.

**Patentansprüche**

1. Eine motorgetriebene Servolenkvorrichtung, die folgendes aufweist:

einen Drehmomentsensor (31), um ein Lenkrehmoment zu erfassen;

einen Motor (32), um eine Antriebskraft zu erzeugen, die einem Lenkmechanismus zur Lenkunterstützung zuzuführen ist;

Einrichtungen (41, 42, 43, 44, 45), um einen Ist-Stromwert (Io) auf der Basis des von dem Drehmomentsensor (31) erfaßten Lenkdrehmoments zu bestimmen;

eine Motorstrom-Detektiereinrichtung (36), um einen Wert eines elektrischen Stroms (Im) zu detektieren, der in dem Motor (32) fließt; und

eine Steuereinrichtung (46, 48, 49) zur Rückführungsregelung einer Soll-Spannung (V), die an den Motor (32) anzulegen ist,

dadurch gekennzeichnet, daß eine Polarisierungseinrichtung (47) vorgesehen ist, die Mittel zum Bestimmen der Polarität der Spannung (V'), die vorher auf den Motor (32) aufgebracht wurde, und Mittel zum Polarisieren des Motorstrom-Detektierwerts (Im) mit der bestimmten Polarität der vorher aufgebrachten Spannung (V') aufweist, und die Steuereinrichtung (46, 48, 49) Einheiten (46, 48) aufweist, um die Soll-Spannung, die auf den Motor (32) aufzubringen ist, auf der Basis des Soll-Stromwerts (Io) und des polarisierten Motorstrom-Detektierwerts (Is) zu bestimmen.

2. Motorgetriebene Servolenkvorrichtung nach Anspruch 1, wobei der Soll-Stromwert (Io) eine Polarität hat, die einer Richtung des Drehmoments entspricht, das von dem Motor (32) auf den Lenkmechanismus aufzubringen ist, und der Wert der Ist-Spannung, die auf den Motor (32) aufgebracht wird, eine Polarität hat, die einer Richtung des Drehmoments entspricht, das von dem Motor (32) auf den Lenkmechanismus aufzubringen ist.

3. Motorgetriebene Servolenkvorrichtung nach Anspruch 1, wobei die Steuereinrichtung (46, 48, 49) die auf den Motor (32) aufzubringende Soll-Spannung auf der Basis einer Differenz zwischen dem polarisierten Motorstrom-Detektierwert (Is) und dem Soll-Stromwert (Io) steuert.

4. Motorgetriebene Servolenkvorrichtung nach Anspruch 1, wobei die Steuereinrichtung (46, 48, 49) folgendes aufweist:

Einheiten (48, 49), um auf der Basis einer Polarität des Soll-Spannungswerts ein Pulsbreitensteuersignal einer von einer ersten Treibereinrichtung (TR1, TR2) und einer zweiten Treibereinrichtung (TL1, TL2) zuzuführen;

Einheiten (48, 49), um eine Einschaltdauer des Pulsbreitensteuersignals auf der Basis des Soll-Spannungswerts zu bestimmen, wobei die erste Treibereinrichtung (TR1, TR2) dem Motor (32) einen elektrischen Strom in einer Richtung mit der Einschaltdauer des Pulsbreitensteuersignals zuführt; und

wobei die zweite Treibereinrichtung (TL1, TL2) dem Motor (32) einen elektrischen Strom in der anderen Richtung mit der Einschaltdauer des Pulsbreitensteuersignals zuführt.

5. Steuerverfahren für eine motorgetriebene Servolenkvorrichtung, um eine von einem Motor (32) erzeugte Antriebskraft an einen Lenkmechanismus zu liefern, um den Lenkvorgang zu unterstützen, wobei das Verfahren folgende Schritte aufweist:

Detektieren des Lenkdrehmoments;

Bestimmen eines Soll-Stromwerts (Io) auf der Basis des detektierten Lenkdrehmoments;

Detektieren eines elektrischen Stromwerts (Im), der in dem Motor (32) fließt;

gekennzeichnet durch
Bestimmen der Polarität der vorher auf den Motor (32) aufgebrachten Spannung (V') und Polarisieren des Motorstrom-Detektierwerts (Im) mit der bestimmten Polarität der vorher aufgebrachten Spannung (V');
Rückführungsregeln einer Soll-Spannung (V), die auf den Motor (32) aufzubringen ist, durch Bestimmen der Soll-Spannung (V) auf der Basis des Soll-Stromwerts (Io) und des polarisierten Motorstrom-Detektierwerts (Is).

6. Steuerverfahren für eine motorgetriebene Servolenkvorrichtung gemäß Anspruch 5, wobei der Soll-Stromwert (Io) eine Polarität hat, die einer Richtung des Drehmoments entspricht, das von dem Motor (32) auf den Lenkmechanismus aufzubringen ist, und der Wert der Soll-Spannung (V), die auf den Motor (32) aufzubringen ist, eine Polarität hat, die einer Richtung des Drehmoments entspricht, das von dem Motor (32) auf den Lenkmechanismus aufzubringen ist.

7. Steuerverfahren für eine motorgetriebene Servolenkvorrichtung nach Anspruch 5, wobei das Verfahren ferner aufweist:

Steuern der Soll-Spannung (V), die auf den Motor (32) aufzubringen ist, auf der Basis einer Differenz zwischen dem polarisierten Motorstrom-Detektierwert (Is) und dem Soll-Stromwert (Io).

8. Steuerverfahren für eine motorgetriebene Servolenkvorrichtung nach Anspruch 5, wobei das Verfahren ferner die folgenden Schritte aufweist:

auf der Basis einer Polarität des Soll-Spannungswerts (V) Zuführen eines Pulsbreitensteuersignals zu einer von einer ersten Treibereinrichtung (TR1, TR2) und einer zweiten Treibereinrichtung (TL1, TL2); und

Bestimmen einer Einschaltdauer des Pulsbreitensteuersignals auf der Basis des Soll-Spannungswerts,

wobei die erste Treibereinrichtung (TR1, TR2) dem Motor (32) einen elektrischen Strom in einer Richtung mit der Einschaltdauer des Pulsbreitensteuersignals zuführt; und

die zweite Treibereinrichtung (TL1, TL2) dem Motor (32) einen elektrischen Strom in der anderen Richtung mit der Einschaltdauer des Pulsbreitensteuersignals zuführt.

**Revendications**

1. Appareil de direction assistée à moteur, comprenant :

un capteur de couple (31) pour détecter le couple de direction ;
un moteur (32) pour engendrer une force d'entraînement à fournir à un mécanisme de direction pour aider à la manoeuvre de direction ;
des moyens (41,42,43,44,45) de détermination d'une valeur de courant électrique désirée (Io) basée sur le couple de direction détecté par ledit capteur de couple (31) ;
des moyens (36) de détection de courant électrique de moteur pour détecter une valeur d'un courant électrique (Im) circulant dans ledit moteur (32) ; et
des moyens de commande (46,48,49) pour le réglage réactif d'une tension désirée (V) à appliquer audit moteur (32) ;

caractérisé en ce que :
il est prévu des moyens de polarisation (47) comprenant des moyens de détermination de la polarité de la tension (V') précédemment appliquée au moteur (32) et des moyens de polarisation de la valeur de détection de courant électrique de moteur (Im) avec la polarité déterminée de la tension précédemment appliquée (V') ; et
lesdits moyens de commande (46,48,49) comprennent des moyens (46,48) de détermination de la tension désirée à appliquer au moteur (32) sur la base de la valeur de courant électrique désirée (Io) et de la valeur de détection de courant électrique de moteur polarisée (Is).

2. Appareil de direction assistée à moteur suivant la revendication 1, dans lequel :
la valeur de courant électrique désirée (Io) a une polarité correspondant à un sens du couple à appliquer au mécanisme de direction par le moteur (32) ; et

la valeur de la tension désirée appliquée au dit moteur (32) a une polarité correspondant à un sens du couple à appliquer au mécanisme de direction par ledit moteur (32).

3. Appareil de direction assistée à moteur suivant la revendication 1, dans lequel les moyens de commande (46,48 ,49) règlent la tension désirée à appliquer au moteur (32), sur la base d'une différence entre la valeur de détection de courant électrique de moteur polarisée (Is) et la valeur de courant électrique désirée (Io).

4. Appareil de direction assistée à moteur suivant la revendication 1, dans lequel les moyens de commande (46,48,49) comprennent :

des moyens (48,49) pour fournir, sur la base d'une polarité de la valeur de tension désirée,un signal de commande de largeur d'impulsion à l'un ou l'autre d'un premier dispositif de commande (TR1,TR2) et d'un deuxième dispositif de commande (TL1,TL2) ;

des moyens (48,49) pour déterminer un rapport d'activité du signal de commande de largeur d'impulsion sur la base de la valeur de tension désirée ;

de sorte que le premier dispositif de commande (TR1,TR2) fournit au moteur (32) un courant électrique dans un premier sens, au rapport d'activité du signal de commande de largeur d'impulsion ; et

le deuxième dispositif de commande (TL1,TL2) fournit audit moteur (32) un courant électrique dans l'autre sens, au rapport d'activité du signal de commande de largeur d'impulsion.

5. Méthode de commande pour un appareil de direction assistée à moteur fournissant une force d'entraînement engendrée par un moteur (32) à un mécanisme de direction afin d'aider à la manoeuvre de direction, comprenant :

la détection d'un couple de direction ;

la détermination d'une valeur de courant électrique désirée (Io) sur la base du couple de direction détecté ;

la détection d'une valeur de courant électrique (Im) circulant dans ledit moteur (32) ; caractérisée par :

la détermination de la polarité de la tension (V') précédemment appliquée au moteur (32) et la polarisation de la valeur de détection de courant électrique de moteur (Im) avec la polarité déterminée de la tension précédemment appliquée (V') ; et

la commande réactive d'une tension désirée (V) à appliquer au moteur (32) par détermination de la tension désirée (V) sur la base de la valeur de courant électrique désirée (Io) et de la valeur de détection de courant électrique de moteur polarisée (Is).

6. Méthode de commande d'un appareil de direction assistée à moteur suivant la revendication 5, dans laquelle :

la valeur de courant électrique désirée (Io) a une polarité correspondant à un sens du couple à appliquer au mécanisme de direction par le moteur (32) ; et

la valeur de la tension désirée (V) à appliquer audit moteur (32) a une polarité correspondant à un sens du couple à appliquer audit mécanisme de direction par ledit moteur (32).

7. Méthode de commande d'un appareil de direction assistée à moteur suivant la revendication 5, comprenant en outre :

la commande de la tension désirée (V) à appliquer au moteur (32) sur la base d'une différence entre la valeur de détection de courant électrique de moteur polarisée (Is) et la valeur de courant électrique désirée (Io).

8. Méthode de commande d'un appareil de direction assistée à moteur suivant la revendication 5, comprenant en outre :

la fourniture, sur la base d'une polarité de ladite valeur de tension désirée (V), d'un signal de commande de largeur d'impulsion à l'un ou l'autre d'un premier dispositif de commande (TR1,TR2) et d'un deuxième dispositif de commande (TL1, TL2) ; et

la détermination d'un rapport d'activité du signal de commande de largeur d'impulsion sur la base de la valeur de tension désirée ;

de sorte que le premier dispositif de commande (TR1,TR2) alimente le moteur (32) avec un courant électrique dans un sens, au rapport d'activité du signal de commande de largeur d'impulsion ; et

le deuxième dispositif de commande (TL1,TL2) alimente ledit moteur (32) avec un courant électrique dans l'autre sens, au rapport d'activité du signal de commande de largeur d'impulsion.

FIG. 1

EP 0 611 691 B1

EP 0 611 691 B1

## F I G. 3

## F I G. 4

FIG. 5

FIG. 6

FIG. 6 flowchart:

MOTOR CONTROL

READ $I_0$ — n1

READ $I_M$ — n2

$V' \geqq 0$? — n3
NO → $I_S \leftarrow -I_M$ — n4
YES → $I_S \leftarrow +I_M$ — n5

$\Delta I \leftarrow I_0 - I_S$
$I \leftarrow \Delta I \times K_I$ — n6

$\Delta P \leftarrow \Delta I - \Delta I'$
$P \leftarrow \Delta P \times K_P$ — n7

$V \leftarrow V' + I + P$ — n8

$\Delta I' \leftarrow \Delta I$ — n9

$V \leftarrow \dfrac{V + V'}{2}$ — n10

$V' \leftarrow V$ — n11

OUTPUT CONTROL SIGNAL — n12

RETURN

F I G. 7

EP 0 611 691 B1